# EUROPÄISCHE PATENTANMELDUNG

(11) **EP 0 688 644 A2**
(43) Veröffentlichungstag der Anmeldung: **27.12.1995**
(21) Anmeldenummer: 95109464.8
(22) Anmeldetag: 19.06.1995
(51) Int. Cl.: B29B 17/00, B29B 13/10, B29C 43/06

(54) **Formteil und Verfahren zu seiner Herstellung**

(30) Priorität: 23.06.1994 US 264661
(71) Anmelder: Eduard Küsters Maschinenfabrik GmbH & Co. KG, D-47805 Krefeld (DE)
(72) Erfinder: Funger, Bernhard, D-47839 Krefeld (DE); Grüber, Heinz, D-47918 Tönisvorst (DE)
(74) Vertreter: Palgen, Peter, Dr. Dipl.-Phys.

(57) **Zusammenfassung**

Teppichmaterial (10) mit mindestens einem Anteil an ungereinigtem Altteppich wird zu einem faserartigen Gewölle zerkleinert. Das Teppichmaterial enthält ein niedrigschmelzendes thermoplastisches Bindemittel, z.B. Polypropylen, welches aus dem Altteppich stammen oder zugesetzt sein kann. Dem Teppichmaterial wird ferner ein duroplastisch aushärtendes Bindemittel, z.B. Phenolharz zugesetzt. Mit diesen beiden Bindemitteln wird das Teppichmaterial bei einer über dem Erweichungspunkt des thermoplastischen Bindemittels, jedoch unter dem Erweichungspunkt etwaiger sonstiger thermoplastischer Anteile des Teppichmaterials liegenden Temperatur zu dem Formteil bzw. der Platte verpreßt.

## Beschreibung

Die Erfindung bezieht sich auf ein Formteil nach dem Oberbegriff des Anspruchs 1 und ein Verfahren zu seiner Herstellung nach dem Oberbegriff des Anspruchs 21.

Ein Problem wachsender Bedeutung stellt die Entsorgung von sogenannten Altteppichen dar, das heißt von Teppichmaterial, welches in Wohnungen oder Objekten manche Jahre als Auslegeware gelegen hat und nun aus Gründen der Abnutzung oder der Renovierung entfernt und durch neue Ware ersetzt wird. Die Altteppiche fallen in einer erheblichen Menge an, die einen bedeutenden Anteil der Teppichproduktion ausmacht. Bisher war es üblich, Altteppiche, die in der Bundesrepublik als Sondermüll gelten, zu verbrennen oder zu deponieren, wobei einschneidende behördliche Auflagen zu beachten sind.

Es sind aber bereits Tendenzen bemerkbar, die Entsorgungslast auf die Teppichhersteller zu verlagern und sie zu verplichten, Altteppiche in einer bestimmten Proportion zur Produktion zurückzunehmen. Die Verantwortung für das Altmaterial landet auf diese Weise wieder beim Hersteller.

Besondere Schwierigkeiten bei Überlegungen zur Wiedernutzung des textilen Fasermaterials in den Altteppichen liegen einerseits in der fehlenden Sortenreinheit und andererseits in der Belastung des textilen Material mit Fremdstoffen.

Die fehlende Sortenreinheit ist in zwei Hinsichten gegeben. Sie kann beim einzelnen Teppich vorhanden sein, der z.B. einen Pol aus Polyamid oder Polyester und einen Rücken aus Polypropylen oder dergleichen aufweisen kann. Sie liegt aber auch in der zur Wiederverwertung anfallenden Gesamtmenge der Altteppiche vor, insofern die Herkunft und die Zusammensetzung des einzelnen Teppichstücks meist nicht bekannt ist und sich eine diesbezügliche Untersuchung einzelner Teppichstücke aus Kostengründen verbietet. Die Sortenvermischung hat überdies noch einen besonderen Aspekt, insofern außer thermoplastischen oder duroplastischen Kunststoffasern auch tierische oder pflanzliche Fasern wie Wolle oder Baumwolle zugegen sein können. Es muß also in einer Menge an Altteppichstücken hinsichtlich der Fasern praktisch mit allem gerechnet werden.

Im Hinblick auf die Fremdstoffe haben Untersuchungen gezeigt, daß die Belastung der Altteppiche bis zu 30 Gewichtsprozent betragen kann. Es handelt sich dabei um Schmutz, der im Laufe der Zeit in Gestalt von Staub oder in den Teppich hineingetretenen organischen oder mineralischen Partikeln in den Teppich hineingelangt ist und um Reste des Rückens, das heißt des Schaummaterials und der Füllstoffe sowie anhaftende Kleberreste.

Bemühungen zur Wiedergewinnung der textilen Anteile in reiner Form, die mit einer Reinigung der Altteppiche und einer Isolierung der Fremdstoffe einhergehen, sehen sich vor einem Anteil von bis zu 300 kg dieser Fremdstoffe pro Tonne Altteppich, die nach der aufwendigen Reinigung und Sortierung des Altteppichmaterials irgendwie dauerhaft unschädlich gemacht werden müssen.

Es hat nicht an Versuchen gefehlt, Teppichmaterial einer erneuten sinnvollen Nutzung zuzuführen, z.B. indem es zu Platten verpreßt worden ist.

So ist in der DE 24 57 848 A1 ein Preßstoffkörper beschrieben, der auch die Gestalt einer Platte haben kann, bei welchem Abfallmaterial von Teppichen geschnitzelt und mit einem Bindemittel in gepreßtem Zustand abbinden gelassen wird. Das Bindemittel kann unter anderem Phenolharz enthalten, aber auch ein schäumfähiges Bindemittel sein. Die Platte kann eine Deckschicht aus Papier, textilem Material, Kunststoff, Holz oder dergleichen aufweisen. Ein anderer Versuch dieser Art ist Gegenstand der DE 27 22 774 A1, in welcher die Verwertung von Abfällen von Autoteppichen und Nadelfilzen beschrieben ist, die thermoplastische Anteile aufweisen. Die Abfälle werden geschnitten, in einer Schicht angeordnet und über den Schmelzpunkt eines Teils der thermoplastischen Anteile erhitzt, gepreßt und abgekühlt. Als Beispiel für die thermoplastischen Anteile sind Polyethylen und Polypropylen genannt, die bereits bei 160 bis 180° genügend fließfähig sind, um die Gesamtmasse zu durchdringen und einen homogenen Preßstoffkörper zu bilden.

Auch die DD-PS 61 094 und die AT-PS 25 25 46 befassen sich mit dem Verpressen von textilen Abfällen zu Platten.

Gemeinsam ist den bisher erwähnten Versuchen, daß sie auf die Verwendung von Produktions- und Konfektionierungsabfällen gerichtet sind, das heißt sich mit unbenutztem Material gleichbleibender, wenn auch möglicherweise nicht sortenreiner Zusammensetzung befaßten. Das Problem, daß die bis zu 30 Gewichtsprozent der Gesamtmenge ausmachenden Fremdstoffe die Bindung der Platten und deren mechanische Eigenschaften beeinflussen, lag bei dem geschilderten Versuchen nicht vor und ist dementsprechend auch nicht in Angriff genommen worden. Dies ist vielmehr erst in der DE 41 37 744 A1 geschehen, bei der auch Altteppiche verarbeitet und beim Pressen einer Platte thermoplastische Teppichanteile besonders in oberflächennahen Bereichen aufgeschmolzen wurden, um hier eine Art Tragschicht eines Schichtwerkstoffs zu bilden. Es hat sich aber gezeigt, daß die nach der DE 41 37 744 A1 hergestellten Platten in ihren mechanischen Eigenschaften noch verbesserungsbedürftig sind.

Der Erfindung liegt die Aufgabe zugrunde, Altteppich umfassende Teppichreste mit minimalem Aufwand dauerhaft zu entsorgen.

Diese Aufgabe wird durch die Herstellung eines Formteils nach Anspruch 1 und das entsprechende Verfahren nach Anspruch 21 gelöst.

Die erfindungsgemäßen Formteile - in erster Linie aber keinesfalls ausschließlich Platten - sind von einer erstaunlichen Biegesteifigkeit, das heißt das Material besitzt einen hohen E-Modul. Um dies zu veranschaulichen, sei erwähnt, daß es mit den Händen kaum möglich ist, eine quadratische Platte des erfindungsgemäßen Materials von 6 mm Dicke um mehr als einen der Dicke entsprechenden Betrag durchzubiegen. Ein Durchbrechen läßt sich von Hand nicht herbeiführen.

Für die hohe Biegesteifigkeit des Produkts ist das Zusammenwirken mehrerer Merkmale von Bedeutung.

Es muß zunächst das Teppichmaterial so intensiv zerkleinert werden, daß dem Zerkleinerungsprodukt nichts Teppichartiges mehr anhaftet. Die Zerkleinerung muß eine Zerlegung des Teppichmaterials bis in seine einzelnen Fasern ergeben, so daß das Zerkleinerungsprodukt eine Art grobfasriger Watte wird, was mit dem Ausdruck "fasriges Gewölle" gemeint ist.

Wenn ein solcher Füllstoff mit einem thermoplastischen, bei der Verarbeitungstemperatur geschmolzenen Bindemittel verpreßt wird, wird es von dem thermoplastischen Bindemittel ganz durchdrungen, und es bildet das thermoplastische Bindemittel gewissermaßen eine Matrix, in der die Fasern eingelagerte Verstärkungselemente bilden, so daß sich eine Art Verbundwerkstoff ergibt. Durch die feine Zerkleinerung des Teppichmaterials ist das Volumen des fertigen Formteils ziemlich homogen mit Fasern durchdrungen, so daß keine unverstärkten Zonen größeren Ausmaßes auftreten und das Formteil nach außen hin homogen verstärkt erscheint.

Das besonders Überraschende ist jedoch das vorteilhafte Zusammenwirken zweier Arten von Bindung, nämlich derjenigen über die thermoplastischen Anteile der Gesamtmasse und derjenigen über das duroplastisch aushärtende Bindemittel, als welche die gleichen harzartigen Verbindungen in Betracht kommen, die auch bei der Herstellung von Spanplatten Verwendung finden. Bei Spanplatten greifen diese Bindemittel aber am Holz an, während hier eine deutliche Steigerung der Festigkeitseigenschaften auch ohne das Vorhandensein von Holz festzustellen ist, was nicht erwartet werden konnte.

Bei einem andersartigen, nämlich zellulosischen Fasermaterial, geht das gleichzeitige Vorhandensein an thermoplastischen und duroplastischen Bindemitteln aus der DE 32 33 385 C2 hervor. Hierbei sind diese unterschiedlichen Bindemittel ab in verschiedenen Schichten eines Mehrschichtverbundstoffs angeordnet, so daß das Zusammenwirken an ein und derselben Stelle fehlt.

Ein weiteres nicht zu erwartendes vorteilhaftes Ergebnis bei der Erfindung besteht darin, daß der hohe Anteil an Fremdstoffen in den verwerteten Altteppichen, also der Schmutz, die Schaumreste und die Kleberreste problemlos in die Formteile integriert wird und die Festigkeitseigenschaften des Materials eher positiv beeinflußt. Es ist also mit dem erfindungsgemäßen Verfahren möglich, Altteppiche so zu verarbeiten, wie sie angeliefert werden, und ohne aufwendige Reinigungs- und Separierprozesse daraus die erfindungsgemässen Formteile herzustellen.

Die Formteile haben eine gute Oberflächenqualität und können häufig eingesetzt werden, wie sie aus der Presse kommen. Hierfür dürfte der thermoplastische Anteil verantwortlich sein, der sich unter dem Druck in alle Zwischenräume des Materials hineindrängt und die Oberfläche schließt.

Daß die Aufheizung des Materials in der Presse nicht so weit getrieben wird, daß sämtliche thermoplastischen Anteile schmelzen, hat seine Gründe: einerseits sollen durchaus Fasern in ihrer Faserstruktur und ihrem beispielsweise durch Verstrickung gewonnenen Eigenschaften erhalten bleiben, um in dem fertigen Werkstoff als verstärkendes Verbundmaterial zu wirken. Zum andern erforderte das Aufschmelzen aller thermoplastischen Anteile so hohe Temperaturen, wie sie mit den heutigen Heizflüssigkeiten für Pressen kaum darstellbar sind. Die hohen Temperaturen sind auch wegen der Wärmeverluste und nicht anzustreben. Die Aufheizung soll vielmehr gerade so weit gehen, daß die niedrigsten Schmelz- und Erweichungsbereiche überschritten werden und der Bindungsmechanismus über das Aufschmelzen und Verteilen unter Druck dieser thermoplastischen Komponente des Gesamtmaterials zum Tragen kommt.

Die Preßdauer wird so gewählt, daß die thermoplastische Bindung und das Zusammenwirken mit dem duroplastisch aushärtenden Bindemittel über die Dicke des Formteils möglichst gleichmäßig erfolgen.

Die Wärme muß ja von den Preßflächen her in die schlecht wärmeleitende Preßmasse hineingebracht werden, was eine gewisse Zeit erfordert, bis die Temperatur auch im Innern auf einen zum Schmelzen des thermoplastischen Bindemittels ausreichenden Wert gestiegen ist.

Das thermoplastische Bindemittel, das unter diesem Aspekt in erster Linie in Betracht kommt, ist Polypropylen, welches häufig z.B. als Rückenmaterial in modernen, als Auslegeware verwendeten Teppichmaterialien vorkommt. Es hat einen Erweichungspunkt im Bereich von etwa 160° C und wird relativ dünnflüssig, was die Verteilung durch die Fasermasse hindurch fördert (Anspruch 2).

In Fällen, in denen das zur Verfügung stehende Teppichmaterial von Haus aus genügend an derartigen thermoplastischen Bindemitteln umfaßt, kann das Teppichmaterial insoweit so verwendet werden, wie es angeliefert worden ist. Es bedarf dann lediglich noch des Zusatzes des duroplastisch aushärtenden weiteren Bindemittels.

Wenn aber der eigene Gehalt des Teppichmaterials an niedrig schmelzendem thermoplastischen Bindemittel zu gering ist, kann derartiges Bindemittel dem Teppichmaterial auch zugesetzt werden, z.B. in Gestalt von sortenreinem, aus dem thermoplastischen Bindemittel bestehenden Abfallmaterial, z.B. von Teppichresten aus der Fabrikation oder der Konfektion.

Obwohl Ausgangspunkt der Erfindung das Problem der Altteppiche gewesen ist, ist sie nicht auf den ausschließlichen Einsatz solcher Altteppiche beschränkt, sondern es muß lediglich ein gewisser Anteil solcher Altteppiche vorhanden sein, dem aber auch andere oder gebrauchte Teppichabfälle und auch sonstige kleinteiligen Abfälle zugesetzt werden können.

Als duroplastisch aushärtende Bindemittel kommen u.a. diejenigen in Frage, die in Anspruch 3 aufgezählt und für sich genommen aus der Spanplattentechnologie, das heißt zum Binden von Holzmassen, bekannt sind.

Eine wichtige Ausgestaltung der Erfindung, die einen weiteren bedeutenden Gewinn an Biegefestigkeit bzw. E-Modul ergibt, ist der Zusatz eines Anteils von 10 bis 50 Gewichtsprozent des Teppichmaterials an faserartigen Holzspänen in homogener Verteilung und willkürlicher Orientierung (Anspruch 4).

Die zugesetzten Holzspäne können eine Größenverteilung und Gestalt nach Anspruch 5 aufweisen, das heißt es kann sich um in einem Refiner gemahlenes Material handeln, ähnlich dem Ausgangsmaterial für MDF (Medium Density Fibers)Platten.

Anstatt aus einem gleichmäßig durchmischten Ausgangsmaterial hergestellt zu sein und entsprechend im ganzen Volumen gleichmäßige Eigenschaften aufzuweisen, kann das Formteil gemäß Anspruch 6 auch ein Zusammensetzungsprofil aufweisen, welches durch eine entsprechend unterschiedliche Einstreuung des zerkleinerten Ausgangsmaterials erzielbar ist.

So kann in der Nähe mindestens einer Oberfläche der Bindemittelanteil gemäß Anspruch 7 erhöht sein. Dies ergibt eine besonders homogene und geschlossene Oberfläche.

Auch kann der Gehalt an faserartigen Holzspänen in der Nähe mindestens einer Oberfläche größer sein. Diese Verteilung ergibt an dem Formteil eine manchmal erwünschte mehr holzartige Oberfläche und insbesondere in dem oberflächennahen Bereich eine durch Verbundwirkung erhöhten E-Modul und damit eine besonders wirksame Förderung der Biegefestigkeit.

In an sich bekannter Weise kann das fertig gepreßte Formteil an mindestens einer Oberfläche eine Beschichtung aufweisen (Anspruch 9), die ihrerseits eine geschlossene Oberfäche besitzen kann (Anspruch 10), beispielsweise in Gestalt einer Pulverbeschichtung oder Lackierung.

Das Formteil kann auch eine Deckschicht, das heißt eine dicke Auflage aus separatem Material tragen (Anspruch 11), die ihrerseits aus einem rollbaren Flächengebilde bestehen kann (Anspruch 12).

Eine besonders wichtige Ausführungsform mit Deckschicht ist Gegenstand des Anspruchs 13 und umfaßt dünne Holzspäne, die etwa gemäß Anspruch 14 dimensioniert sein können.

Es ergibt sich hierdurch ein neuartiger Holzwerkstoff von ansprechendem, durch Holzspäne gebildetem Äußeren. Bei einer Deckschicht aus solchen Holzspänen ist das Zusammenwirken mit dem plastifizierbaren, mit dem thermoplastischen Bindemittel versehenen Teppichmaterial von großer Bedeutung. Die Holzspäneschicht ist nach der Streuung sehr unregelmäßig ausgebildet. Sie wird durch das Pressen niedergedrückt. Die Versuchsergebnisse zeigen, daß sich Formteile mit glatter nahezu ebener Oberfläche herstellen lassen, die ohne Nacharbeit verwendet werden können. Die durch die zufällige Anordnung der flachen Holzspäne sich ergebende Unregelmäßigkeiten der Schichtdicke drücken sich nach innen weg und werden von dem thermoplastischen Teppichmaterial aufgenommen. Während also die äußere Oberfläche glatt ist, ist die innere, dem verpreßten Teppichmaterial zugewandte Oberfläche der Späneschicht in ihrer Dicke unregelmäßig und wellig, was das plastifizierte Teppichmaterial jedoch ausgleichen kann. Dieser Werkstoff ist in seiner Art neu und besitzt sehr vorteilhafte Eigenschaften und sogar einen immanenten dekorativen Wert, der eine Verwendung ohne weitere Veredelung zuläßt.

Die bisher beschriebenen Eigenschaften der Erfindung sind von der Gestalt des Formteils unabhängig. Es können also bei der Herstellung des Materials durch Verpressen entsprechende Preßformen eingesetzt werden, die z.B. Auskleidungs- und Schalldämmungskörper und dergleichen ergeben.

Ein wesentliches Ausführungsbeispiel der Erfindung ist jedoch ein Formteil in Gestalt einer Platte, die z.B. in einer beheizbaren Doppelbandpresse gepreßt werden kann (Anspruch 15).

Es kann die Deckschicht in diesem Fall schon bei der Herstellung des Formteils mit diesem zusammengebracht werden, beispielsweise indem eine als rollbare Bahn vorliegende Deckschicht mit durch die Doppelbandpresse hindurchläuft.

Bei der Ausführungsform nach Anspruch 16 kann die Deckschicht jedoch auch auf das fertige Formteil aufkaschiert sein.

Formteil und Deckschicht werden dabei gemeinsam durch eine geeignetge Presse oder einen Walzspalt hindurchgeleitet, wodurch sich die Verbindung der beiden Komponenten zu der fertigen Platte ergibt.

Die Deckschicht kann aus jeglichem geeigneten Material bestehen, z.B. aus Kunststoff, aus kunstharzgetgränktem Papier, aus Holz und aus Metall, z.B. Aluminium oder Kupfer.

Ein besonders interessanter Fall ist in diesem Zusammenhang eine Platte, bei der die Deckschicht aus einem Blech aus korrosionsfestem Stahl besteht (Anspruch 17).

Ein solches Material kann immer eingesetzt werden, wenn eine Wandung einem Korrosionsangriff ausgesetzt ist und gleichzeitig eine gute Wärmedämmung aufweisen soll. Dies ist z.B. der Fall, wenn die Wandung einen Raum mit einer agressiven Atmosphäre umgibt, der sich auf einer erhöhten oder erniedrigten Temperatur befindet. So können z.B. Dämpferwandungen, die ziemlich großflächig sind und meist einen Temperaturunterschied zwischen innen und außen von 80° C und den entsprechenden Wärmeverlust aufweisen, vorteilhaft aus dem erfindungsgemäßen Verbundmaterial hergestellt werden. Das korrosionsfeste Blech kann dann wesentlich dünner gewählt werden als bei den bisherigen Konstruktionen, bei denen die Steifigkeit durch das Blech allein erbracht werden muß. Bei dem erfindungsgemäßen Verbundmaterial leistet die aus den Teppichresten gepreßte Platte einen wesentlichen Beitrag zur Steifigkeit und erhöht überdies die Wärme- und auch Schalldämmung gegenüber dem reinen Blech bedeutend.

Das zur Herstellung des erfindungsgemäßen Formteils bzw. der Platte dienende Ausgangsmaterial aus zerkleinerten Teppichresten hat eine nicht unproblematische Struktur. Es besteht aus den Textilfasern, die das erwähnte "faserartige Gewölle" bilden, und den in dem Altteppich vorhandenen Fremdstoffen, die einen bestimmten Anteil an mineralischen Schmutzstoffen enthalten, die die Tendenz haben, durch das Gewölle hindurchzufallen, so daß sich beim Streuen der zu verpressenden Matte häufig eine Einseitigkeit des Formteils bzw. der Platte einstellt, weil sich Fremdstoffe auf der Unterlage ansammeln.

Um diesen Effekt zu vermeiden, hat es sich als zweckmäßig erwiesen, daß das Formteil einen Anteil von 0,5 bis 2 % Wachs oder Stearin enthält, der dem zu verpressenden Gesamtmaterial vor dem Aufstreuen z.B. durch Aufsprühen als Emulsion oder in sonstiger verflüssigter Form zugesetzt worden ist. Die Vermischung mit dem Wachs oder Stearin kann während der Zerkleinerung des Teppichmaterials z.B. beim Mahlen oder in einem sich an das Zerkleinern anschließenden separaten Mischvorgang erfolgen. Überraschenderweise hat sich gezeigt, daß ein Zusatz an Wachs oder Stearin eine wesentliche Verminderung der Entmischung der Fremdstoffanteile und der Faseranteile des zu verpressenden Gesamtmaterials mit sich bringt, so daß die unerwünschte Einseitigkeit der hergestellten Formteile bzw. Platten fast ganz unterdrückt werden kann.

Ein weiterer, unter Nutzung der Erfindung herstellbarer Plattenwerkstoff ist Gegenstand der Ansprüche 19 und 20.

Es kann hierbei ein relativ dünnes Plattenmaterial aus den Teppichresten hergestellt und mit Flächengebilden vergleichbarer Dicke, insbesondere starkem Holzfurnier, zu einem sperrholzartigen Verbundmaterial zusammengefügt werden, dessen Schichtenzahl je nach Verwendungszweck frei wählbar ist und bei dem jede zweite Schicht nicht aus dem Flächengebilde bzw. dem Furnier, sondern aus dem erfindungsgemäßen Plattenmaterial besteht. Dieser Plattenwerkstoff weist durch seine Oberfächen ein holzartiges Erscheinungsbild auf, spart aber durch den Einsatz des erfindungsgemäßen Plattenmaterials im Innern viel Holz.

In den Ansprüchen 21 bis 30 sind die verfahrensmäßigen Aspekte der Erfindung festgehalten.

Anhand der Zeichnung wird die Erfindung näher erläutert.
Fig. 1 zeigt eine Ansicht des erfindungsgemäß zu ver pressenden Teppichmaterials;
Fig. 2 zeigt eine Ansicht des gleichen Materials mit einem Zusatz an faserartigen Holzspänen;
Fig. 3 zeigt eine schematische Seitenansicht einer Doppelbandpresse zur Herstellung von Plattenmaterial nach der Erfindung;
Fig. 4 zeigt eine Ansicht einer Plattenfläche;
Fig. 5 eines Plattenquerschnitts einer erfindungsgemäßen Platte in etwa 1,5-facher Vergrößerung;
Fig. 6 zeigt eine Ansicht eines erfindungsgemäßen Plattenmaterials mit einer Deckschicht aus flachen dünnen Holzspänen;
Fig. 7 zeigt einen Querschnitt der Platten auf Fig. 6 in etwa 1,5-facher Vergrößerung;
Fig. 8 zeigt einen Querschnitt durch ein mit mehreren dünnen Schichten des erfindungsgemäßen Plattenmaterials aufgebauten Plattenwerkstoffs.

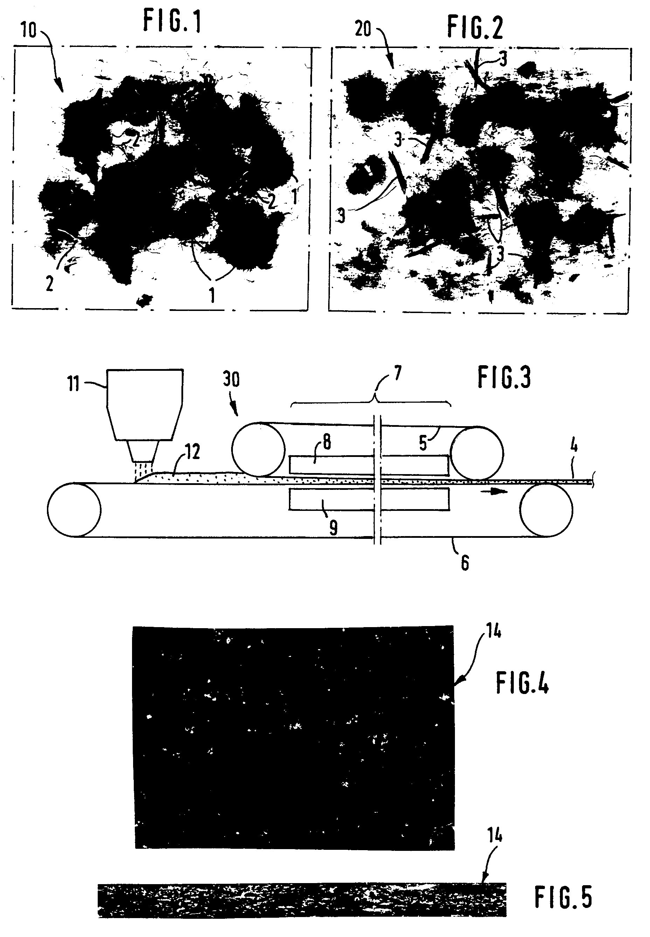

Das in Fig. 1 wiedergegebene Teppichmaterial besteht aus Altteppich, der in einer Hackmaschine in etwa handtellergroße Stücke zerhackt und anschließend in einer Mühle fein zermahlen worden ist, wobei keinerlei Reinigung stattgefunden hat und die bis zu 30 % des Gewichts betragende Belastung mit Fremdstoffen, insbesondere Schmutz, Sand und anderen mineralischen Partikeln in dem Material verbleibt.

Die Zerkleinerung durch das Mahlen geht so weit, daß die Teppichstruktur vollkommen verloren geht und nur noch ein fasriges Gewölle übrigbleibt, welches sich beim Durchgang durch das Ausgangssieb der Mühle zu kleinen lockeren Bäuschen 1 agglomeriert. In dem gezeigten Ausführungsbeispiel hatte der Teppich einen Polyamid-Flor und einen Bändchenrücken aus Polypropylen. Die Rückenpartikel 2 sind noch als unterschiedliches Material erkennbar. Die thermoplastischen Anteile machen etwa 5 bis 30 Gewichtsprozent, in dem Ausführungsbeispiel etwa 20 Gewichtsprozent des gemahlenen Altteppichs aus.

Während das Teppichmaterial 10 der Fig. 1 nur Bestand teile des Altteppichs enthält, sind dem Teppichmaterial 20 der Fig. 2 gefaserte Holzspäne 3 in einem Anteil von 35 % des zerkleinerten Teppichmaterials zugesetzt.

Die Teppichmaterialien 10 oder 20 enthalten von Haus aus genügend Polypropylen, welches als thermoplastischer Binder dient. Im anderen Fall muß zusätzliches Polypropylen oder ein vergleichbares thermoplastisches Bindemittel zugesetzt werden.

Außerdem wird in jedem Fall dem Teppichmaterial 10 bzw. 20 ein Anteil von 1 bis 15 Gewichtsprozent des Teppichmaterials, beispielsweise 5 oder 10 Gewichtsprozent, an Phenolharz oder einem ähnlichen harzartigen, duroplastisch aushärtenden Bindemittel mit den dafür bekannten Techniken zugesetzt.

Dieses Ausgangsmaterial wird in der Doppelbandpresse 30 der Fig. 3 zu einer Plattenbahn 4 verpreßt. Die Doppelbandpresse 30 umfaßt ein oberes Formband 5 und ein unteres Formband 6 aus Stahlblech, die über Umlenkrollen endlos umlaufen und einer Preßstrecke 7 einander gegenüberliegend mit gleicher Geschwindigkeit im Sinne des Pfeiles vorlaufen. Im Bereich der Preßstrecke 7 sind die vorlaufenden Formbänder 5,6 durch entsprechende, nur schematisch angedeutete Einrichtungen 8,9 abgestützt, und es kann Wärme durch die Formbänder 5,6 hindurch auf die sich bildende Plattenbahn 4 übertragen werden.

Das untere Formband 6 besitzt eine vorgeschaltete Streustrecke, in der aus einem Vorratsbehälter 11 mittels geeigneter Einrichtungen eine Matte oder Schüttung 12 aus dem beleimten aber noch lockeren mit den beiden Bindemitteln (thermoplastisch und duroplastisch aushärtend) versehenen Teppichmaterial hergestellt wird. Die Schüttung 12 wird beim Einlauf zwischen die Formbänder 5,6 verdichtet und in der Preßstrecke 7 nach einem vorgebbaren Zeit-Temperatur-Druckdiagramm ausgehärtet. Die fertig ausgehärtete Plattenbahn wird in dem letzten Stück der Doppelbandpresse oder in einer separat nachgeschalteten Kühleinrichtung abgekühlt und kann dann konfektioniert werden. Eine aus der Plattenbahn 4 entnommene Platte 14 weist ein marmoriertes Aussehen mit dichter ziemlich glatter Oberfläche auf. Über die Dicke der Platte 14 ist ein Strukturunterschied mit dem Auge nicht feststellbar, wie Fig. 5 zeigt. In dem vorliegenden Ausführungsbeispiel war indessen auch eine möglichst homogene Verteilung der Komponenten angestrebt.

Durch Hintereinanderanordnung mehrerer Streueinrichtungen 11 kann in bekannter Weise ein Strukturprofil über die Plattendicke erzeugt werden, z.B. indem zuunterst eine Schicht mit einem höheren Anteil an Polypropylen oder eine Schicht aus einem beleimten Holzwerkstoff bestreut wird, darauf die Hauptschicht des Teppichmaterials 10 gelegt wird und zuoberst wieder eine Schicht mit mehr Polypropylen oder mit Holz angebracht wird. Diese Schichten werden zusammen verpreßt und ergeben dann eine strukturierte Platte.

Um den Einfluß der einzelnen Komponenten qualitativ zu erfassen, wurden Biegeversuche durchgeführt. Die zugrundeliegenden Platten 14 hatten eine Dicke von 6 mm und ein spezifisches Gewicht von 950 kg/m³. Der Flor des verwendeten Teppichmaterials bestand aus Polyamid, der Rücken aus Polypropylen, welches durch Zusatz von Polypropylenabfällen auf einen Anteil an dem Gesamt-Teppichmaterial von 20 % Gewichtsprozent gebracht wurde. Diesem Gesamt-Teppichmaterial wurde ein Zusatz von 10 Gewichtsprozent Phenolharz als duroplastisch aushärtendes Bindemittel beigegeben. Aus den Biegewerten wurden die in der nachfolgenden Tabelle zusammengefaßten E-Module errechnet.

| Teppichmaterial | Polyamid | Polyamid | Polyamid |
|---|---|---|---|
| thermoplastisches Bindemittel | - | Polypropylen 20 % | Polypropylen 20 % |
| duroplastisch aushärtendes Bindemittel | Phenolharz 10 % | - | Phenolharz 10 % |
| E-Modul (N/mm²⁾ | 450 | 590 | 960 |

Den geringsten Wert ergab eine Bindung nur mit dem Phenolharz. Eine Bindung nur mit Polypropylen ließ schon eine deutliche Steigerung des E-Moduls erkennen. Eine Bindung sowohl mit Polypropylen als auch mit Phenolharz ergab fast eine Verdoppelung des E-Moduls. Die beiden unterschiedlichen Typen von Bindemitteln wirken also offensichtlich in einer besonderen Weise zur Steigerung der Formsteifigkeit des erzeugten Produkts zusammen.

Es wurden auch Biegeversuche mit Platten von 6 mm Dicke und einem spezifischen Gewicht von 950 kg/m³ durchgeführt, die aus dem Teppichmaterial 20, also mit einem Zusatz an faserartigen Holzspänen hergestellt war. Das Ergebnis ist in der nachfolgenden Tabelle wiedergegeben.

| | | Versuch 1 | Versuch 2 |
|---|---|---|---|
| Teppichanteil Mischung: | 80 % Polyamid | 65 % | 85 % |
| | 20 % Polypropylen | | |
| Holzanteil | | 35 % | 15 % |
| Phenolharz | | 5 % | 5 % |
| E-Modul (N/mm2) | | 1.620 | 950 |

Der Phenolharzzusatz betrug hier 5 % des Gesamt-Teppichmaterials, das in der angegebenen Weise zusammengesetzt war. Es zeigt sich, daß die Erhöhung des Holzzusatzes von 15 auf 35 Gewichtsprozent einen fast doppelt so hohen E-Modul ergibt, wobei im letzteren Fall der Wert weit über dem holzfreien E-Modul von 960 N/mm² liegt, der unter Einsatz der doppelten Menge des teuren Phenolharzes erzielt worden ist. Der Zusatz von Holzfasern verbessert also die Biegefestigkeit und Formsteifigkeit der erzeugten Platten beträchtlich.

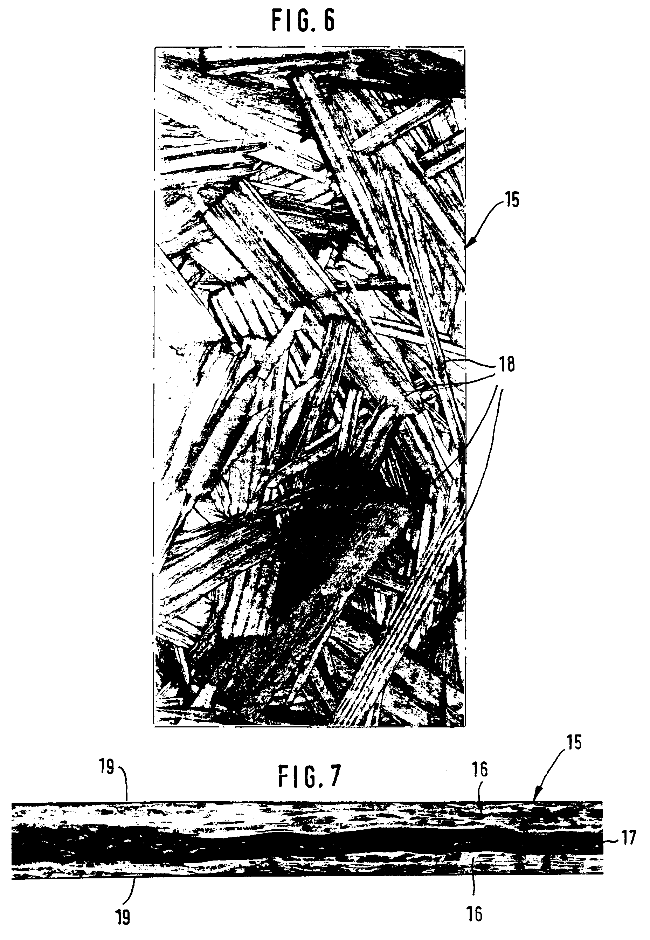

In Fig. 6 und 7 ist eine Platte 15 wiedergegeben, die auf beiden Seiten eine Deckschicht 16 aus großen (Fig. 6 hat den Maßstab 1:1), flachen und sehr dünnen Holzspänen von etwa 0,2 mm Stärke und im großen und ganzen rechteckigem Umriß besteht. Es wird bei der Herstellung von Platte 15 zunächst die untere Deckschicht 16 mit beleimten Spänen 18 bestreut, darauf die Mittelschicht 17 aus dem erfindungsgemäß zerkleinerten Teppichmaterial mit zwei Bindemitteln und darauf die obere Deckschicht 16 aus den beleimten dünnen Spänen 18. Das Ganze wird durch die Doppelbandpresse 30 gefahren. Die Wirrwarrstreuung der Späne 18 führt zu zufälligen Unterschieden der lokalen Anhäufung von Holzmaterial und bei einem bestimmten Zusammenpressungsdruck zu unterschiedlichen Schichtdicken der Deckschichten 16. Da die Mittelschicht 17 aus dem erfindungsgemäßen Teppichmaterial bei der Anwendung von Druck und Wärme in der Preßstrecke 7 stark thermoplastische Eigenschaften aufweist, drückt sich das Dickenprofil der Schichten 16 in der aus Fig. 7 ersichtlichen Weise nach innen, während die äußeren Oberflächen 19 praktisch eben bleiben. Es wird ein sehr biegefestes Verbundmaterial mit der aus Fig. 6 ersichtlichen interessanten Oberfläche erhalten, die trotz der willkürlichen Streuung eben ist und allenfalls an den Rändern der obersten Späne 18 geringfügige Stufen von 0,2 mm Höhe aufweist, aber ansonsten praktisch ebene Oberflächen aufweist.

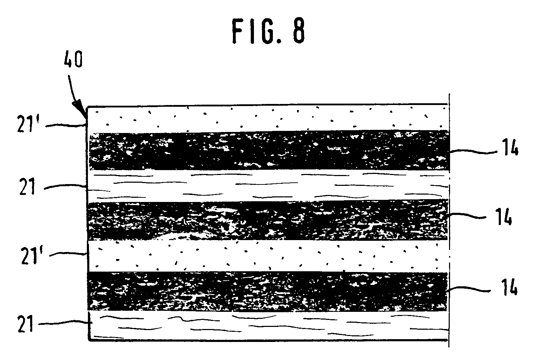

Der Plattenwerkstoff 40 der Fig. 8 ist aus drei dünnen Platten 14 nach den Fig. 4 und 5 in einer Stärke und vier Furnierschichten etwa gleicher Stärke sperrholzartig zusammengesetzt. Die Dicke der einzelnen Schichten beträgt etwa 1 bis 4 mm, in dem Ausführungsbeispiel 2 mm. Bei den Furnierschichten 21 verläuft die Faserrichtung parallel zur Zeichenebene, bei den Furnierschichten 21' senkrecht zur Zeichenebene. Jede Plattenschicht 14 weist auf beiden Seiten eine Holzschicht 21, 21' auf. Durch Kombination verschieden vieler Schichten können Plattenwerkstoffe unterschiedlicher Dicke hergestellt werden, die an wechselnde Bedarfsfälle angepaßt werden können.

Die Herstellung kann so erfolgen, daß eine Standardplatte 14 einer gewissen geringen Dicke hergestellt und in einer gewünschten Anzahl mit den entsprechenden Furnier schichten unter Druck verklebt wird. Es ist aber auch möglich, die Furnierschichten 21,21' mit dem gestreuten Material für die Plattenschichten 14 zusammen durch die Doppelbandpresse 30 zu fahren, so daß der Plattenwerkstoff 40 in einem Zuge hergestellt wird.

Für die Herstellung der Platten 14 nach den Fig. 4 und 5 wurde eine Doppelbandpresse nach der DE-PS 21 57 764 verwendet. Die Temperatur der Formbänder 5,6 gemäß Fig. 3 betrug etwa 200°C, der Druck in der Preßstrecke 7 ca. 500 N/cm². Die Zeit während der das Teppichmaterial dieser Temperatur und diesem Druck ausgesetzt waren, belief sich auf 90 - 180 s.

## Patentansprüche

1. Formteil, welches zu einem Fasergewölle zerkleinertes Teppichmaterial (10,20) mit zumindest einem Anteil an ungereinigtem Altteppich umfaßt, wobei das Teppichmaterial mit geschmolzenem thermoplastischem Bindemittel in einem Anteil von 5 bis 30 Gewichtsprozent des Teppichmaterials durchsetzt ist und zugleich einen Anteil von 1 bis 15 Gewichtsprozent des Teppichmaterials eines duroplastisch aushärtenden Bindemittels enthält und zu einer kompakten Masse verpreßt ist.

2. Formteil nach Anspruch 1, dadurch gekennzeichnet, daß als thermoplastisches Bindemittel Polypropylen zugegen ist.

3. Formteil nach Anspruch 1 oder 2, dadurch gekennzeichnet, daß als duroplastisch aushärtendes Bindemittel Harnstoff-Formaldehyd-Harz, Melamin-Formaldehyd-Harz, Phenol-Formaldehyd-Harz oder Isocyanate zugegen sind.

4. Formteil nach einem der Ansprüche 1 bis 3, dadurch gekennzeichnet, daß es einen Anteil von 10 bis 50 Gewichtsprozent des Teppichmaterials (10,20) an faserartigen Holzspänen (3) in homogener Verteilung und willkürlicher Orientierung enthält.

5. Formteil nach Anspruch 4, dadurch gekennzeichnet, daß die faserartigen Holzspäne (3) eine Größenverteilung mit einem Dickenmaximum bei etwa 0,2 bis 0,4 mm und einem
Schlankheitsgrad von etwa 1:10 bis 1:100 aufweist.

6. Formteil nach einem der Ansprüche 1 bis 5, dadurch gekennzeichnet, daß das gepreßte Formteil über seine Dicke ein Zusammensetzungsprofil aufweist.

7. Formteil nach Anspruch 6, dadurch gekennzeichnet, daß das Formteil an mindestens einer Oberfläche einen erhöhten Gehalt an thermoplastischen und/oder duroplastisch aushärtendem Bindemittel enthält.

8. Formteil nach Anspruch 6, dadurch gekennzeichnet, daß das Formteil an mindestens einer Oberfläche einen höheren Gehalt an faserartigen Holzspänen (3) aufweist.

9. Formteil nach einem der Ansprüche 1 bis 8, dadurch gekennzeichnet, daß das Formteil an mindestens einer Oberfläche eine Beschichtung aufweist.

10. Formteil nach Anspruch 9, dadurch gekennzeichnet, daß die Beschichtung ihrerseits eine geschlossene Oberfläche besitzt.

11. Formteil nach einem der Ansprüche 1 bis 8, dadurch gekennzeichnet, daß das Formteil auf mindestens einer Seite eine Deckschicht aus einem separaten Material trägt.

12. Formteil nach Anspruch 11, dadurch gekennzeichnet, daß die Deckschicht ein Flächengebilde (21,21') ist.

13. Formteil nach Anspruch 12, dadurch gekennzeichnet, daß die Deckschicht aus flachen dünnen Holzspänen (18) besteht, die mit willkürlicher Faserrichtung im wesentlichen parallel zur Formteiloberfläche angeordnet sind.

14. Formteil nach Anspruch 13, dadurch gekennzeichnet, daß die Holzspäne (18) überwiegend eine Dicke von 0,1 bis 0,3 mm und einen Umriß im wesentlichen in Gestalt eines Rechtecks aufweisen, dessen Länge 2 bis 10 cm und dessen Breite 2 bis 30 mm betragen.

15. Formteil nach einem der Ansprüche 1 bis 14, dadurch gekennzeichnet, daß das Formteil eine Platte (14,15, 40) ist.

16. Formteil nach Anspruch 15, dadruch gekennzeichnet, daß die Deckschicht (21,21') auf das Formteil aufkaschiert ist.

17. Formteil nach Anspruch 16, dadurch gekennzeichnet, daß die Deckschicht aus einem Blech aus korrosionsfestem Stahl besteht.

18. Formteil nach einem der Ansprüche 1 bis 17, dadurch gekennzeichnet, daß das Formteil einen Anteil von 0,5 bis 2 Gewichtsprozent Wachs oder Stearin enthält.

19. Plattenwerkstoff, dadurch gekennzeichnet, daß er aus mehreren Platten (14) nach den Ansprüchen 1 bis 17 in einer Dicke von 1 bis 4 mm besteht, die jeweils beidseitig an ein aus einem anderen Material bestehendes Flächengebilde (21,21') im gleichen Dickenbereich grenzen.

20. Plattenwerkstoff nach Anspruch 19, dadurch gekennzeichnet, daß das Flächengebilde (21,21') ein starkes Holzfurnier ist.

21. Verfahren zur Herstellung eines Formteils aus zerkleinertem Teppichmaterial, bei welchem das Teppichmaterial in Anwesenheit eines thermoplastischen Bindemittels unter Wärmezufuhr zu dem Formteil verpreßt wird, dadurch gekennzeichnet, daß als Teppichmaterial ein solches mit mindestens einem Anteil an Altteppich verwendet wird, daß das Teppichmaterial ungereinigt zu einem überwiegend fasrigen Gewölle zerkleinert wird, und daß das zerkleinerte Teppichmaterial in Anwesenheit sowohl eines thermoplastischen Bindemittels in einem Anteil von 5 bis 30 Gewichtsprozent der zu verpressenden Gesamtmasse als auch eines duroplastisch aushärtenden Bindemittels in einem Anteil von 1 bis 15 Gewichtsprozent der zu verpressenden Gesamtmasse bei einer oberhalb des Schmelzpunkts des thermoplastischen Bindemittels, jedoch unterhalb des Schmelzpunkts etwaiger sonst in der gesamten Masse enthaltener thermoplastischer Bestandteile gelegenen Temperatur verpreßt wird.

22. Verfahren nach Anspruch 21, dadurch gekennzeichnet, daß das thermoplastische Bindemittel aus dem Teppichmaterial stammt.

23. Verfahren nach Anspruch 22, dadurch gekennzeichnet, daß zumindest ein Teil des thermoplastischen Bindemittels dem Teppichmaterial zugesetzt wird.

24. Verfahren nach einem der Ansprüche 21 bis 23, dadurch gekennzeichnet, daß das Teppichmaterial zunächst durch Hacken in Stücke mit einer größten Abmessung im Bereich von etwa 5 bis 15 cm vorzerkleinert und anschließend gemahlen oder gerissen wird.

25. Verfahren nach Anspruch 24, dadurch gekennzeichnet, daß das Mahlen fortgesetzt wird, bis das Teppichmaterial durch ein Sieb einer wählbaren Feinheit durchgeht.

26. Verfahren nach einem der Ansprüche 21 bis 25, dadurch gekennzeichnet, daß die Gesamtmischung vor dem Verpressen mit einem Zusatz von Wachs in einer Menge von 0,5 bis 2 Gewichtsprozent der Gesamtmasse versehen wird.

27. Verfahren nach einem der Ansprüche 21 bis 26, dadurch gekennzeichnet, daß das duroplastisch aushärtende Bindemittel und/oder das Wachs während des Mahlvorgangs zugesetzt wird.

28. Verfahren nach einem der Ansprüche 21 bis 27, dadurch gekennzeichnet, daß die das Formteil ergebende Gesamtmasse mit einem senkrecht zur Oberfläche des Formteils verlaufenden Eigenschaftsprofil auf die Formfläche gestreut und dann verpreßt wird.

29. Verfahren zur Herstellung eines Formteils nach Anspruch 6, dadurch gekennzeichnet, daß für eine Außenschicht des Formteils außen eine Schicht nur aus beleimten Holzspänen und für das Innere überwiegend zerkleinertes beleimtes Teppichmaterial gestreut werden und die Holzspäne und das Teppichmaterial zusammen verpreßt wird.

30. Verfahren zur Herstellung eines Formteils nach Anspruch 9, dadurch gekennzeichnet, daß das fertige gepreßte Formteil nachträglich mit einer Beschichtung oder einer Deckschicht versehen wird.
